# EUROPEAN PATENT APPLICATION

(11) **EP 1 386 940 A1**
(43) Date of publication of application: **04.02.2004**
(21) Application number: 02016871.2
(22) Date of filing: 30.07.2002
(51) Int. Cl.: C08K 3/00

(54) **Multipurpose additive for polymeric materials**

(71) Applicant: Stoppa, Alberto, 47100 Forli (IT)
(72) Inventor: Stoppa, Alberto, 47100 Forli (IT)
(74) Representative: Modiano, Guido, Dr.-Ing.

(57) **Abstract**

A multipurpose additive for polymeric materials, comprising a mixture of silica and alumina, both in amorphous form and reactive with respect to polymeric mixtures, the mixture being suitable to increase the thermal conductivity of the polymeric mixtures and to reduce the surface tension between the molecules that constitute the polymeric mixture.

## Description

The present invention relates to a multipurpose additive for polymeric materials and the like.

It is known that in the practical manufacture of articles made of polymeric materials there is the problem of how to achieve maximum production output with a given molding machine.

In other words, there is the problem of how to reduce the product cycle time without increasing the number of manufacturing rejects or without increasing the number of parts that do not meet manufacturing specifications.

In order to reduce product cycle times, several additives have been devised that facilitate some of the individual operations provided in the production cycle. In particular, plasticizers that lower the processing temperature and the subsequent temperature of the injection, by means of nozzles, of the polymeric mass into the mold, lubricants that facilitate the release of the product from the mold, nucleating agents that give homogeneity to the structure of the products, fire retardants and others are known.

Many commercial products have proved to be effective, but unfortunately their cost is not negligible. It is noted in fact that while on the one hand the additives help to increase productivity, on the other hand they are an additional cost factor. In other words, the advantages achieved with an increase in productivity may be eliminated by the higher costs for purchasing such additives.

The aim of the present invention is to avoid these problems by providing a multipurpose additive for polymeric materials and the like that is capable of increasing the workability of the polymeric material, reducing the number of production rejects and reducing the consumption of power and raw material required to produce the finished product, i.e., an additive that is effective in solving such problems.

Within this aim, an object of the present invention is to provide a multipurpose additive that has characteristics that allow to use it particularly as an additive for polyolefins and in the preparation of special heat-resistant coatings.

Another object of the present invention is to provide an additive that is non-toxic, safe and easy to use, and relatively low in cost.

This aim and these and other objects that will become better apparent hereinafter are achieved by a multipurpose additive for polymeric materials, characterized in that it comprises at least one mixture of silica and alumina, both in amorphous form and reactive with respect to polymeric mixtures, said additive being suitable to increase thermal conductivity of said polymeric mixture and to reduce surface tension between molecules that constitute said polymeric mixture.

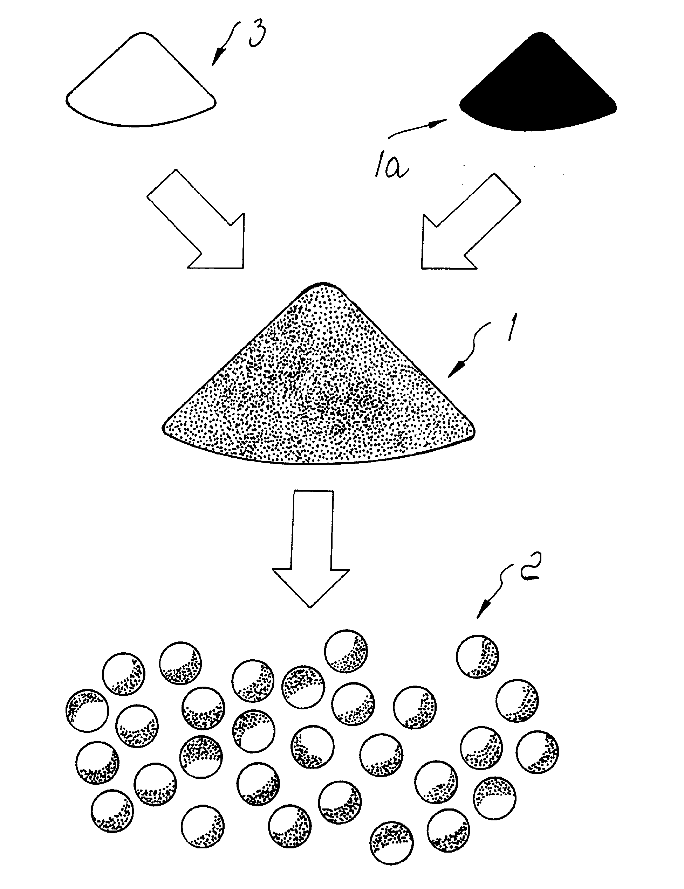

Further characteristics and advantages of the present invention will become better apparent from the following detailed description of the additive according to the invention, illustrated only by way of non-limitative example in the accompanying drawing, which illustrates a schematic form of the preparation of the additive according to the present invention.

With reference to the figure, the reference numeral 1 generally designates a multipurpose additive for polymeric materials and the like.

The additive 1 is prepared in the form of granules 2 to be marketed efficiently and safely.

In this granular form 2, the additive 1 is immobilized within a binding polymeric matrix (carrier) that prevents its dispersion into the atmosphere.

The granules 2 are composed of 50% of a polyolefin matrix 3 such as polyethylene and 50% of the additive in powder form 1a.

The additive powder 1a is used with a particle size from 350 to 250 mesh, preferably between 275 and 325 mesh. Conveniently, the master batch for producing the granule 2 is produced by using powder 1a that has a particle size of approximately 300 mesh.

The powdered additive 1a is a non-toxic natural mineral, which can be classified as glassy pyroclastic tuff, composed of rhyolitic felsite and aluminum silicates in amorphous form.

The additive in granular form 2 is used in a percentage that can vary between 1 and 3% of the total mass. This value can in fact vary according to the polymeric mixture in which the additive is used.

In general, the value of 2% on the total mass can be taken as the value that is effective in achieving most of the advantages that can be achieved with the present invention.

In order to better illustrate the work carried out, Tables A, B and C of three respective samples AA, BB and CC of additive powder 1a are listed hereafter.
In the following Tables, irrelevant components present in the additive that bring to 100 the total value of all the components present in each Table, are neither listed nor quantified.

The molecular chemical composition of the samples of the additive 1a is expressed as a percentage of mass.

**Table A:**

| Sample AA | |
|---|---|
| Component | Component % |
| SiO2 | 75.63 |
| Al203 | 18.80 |
| Fe2O3 | 0.78 |
| MgO | 0.01 |
| CaO | 0.04 |
| Na2O | 0.09 |
| K2O | 0.04 |
| TiO2 | 0.25 |
| P2O3 | 0.06 |
| MnO | 0.01 |

**Table B:**

| Sample BB | |
|---|---|
| Component | Component % |
| SiO2 | 75.09 |
| A12O3 | 19.70 |
| Fe2O3 | 0.32 |
| MgO | 0.00 |
| CaO | 0.03 |
| Na2O | 0.19 |
| K2O | 0.07 |
| TiO2 | 0.30 |
| P2O3 | 0.07 |
| MnO | 0.002 |

**Table C:**

| Sample CC | |
|---|---|
| Component | Component % |
| SiO2 | 76.54 |
| A12O3 | 17.89 |
| Fe2O3 | 0.46 |
| MgO | 0.09 |
| CaO | 0.05 |
| Na2O | 0.20 |
| K2O | 0.29 |
| TiO2 | 0.39 |
| P2O3 | 0.110 |
| MnO | 0.005 |

It is noted, in this regard, that the compositions AA, BB and CC differ from each other to a minimal extent both in their composition and in their beneficial effects, although a slight preference can be given to sample BB. Tables 1, 2 and 3 list the processing parameters of three different types of article produced by injection-molding polyamide (filled or not with glass fiber) in appropriate molds.

In particular, the tables list the variations of the processing parameters occurring when additive 2 is used in the practical injection-molding of polyamide (nylon) from a mixer into a mold.

**Table 1:**

| Material: Polyamide + 30% glass fiber | Unit of measure | Value without additive 2 | Value with 2% additive 2 |
|---|---|---|---|
| Region 1 mixer | °C | 280 | 265 |
| Region 2 mixer | °C | 260 | 245 |
| Speed of injection screw feeder | rpm | 70 | 90 |
| Part cooling time | sec | 185 | 120 |
| Dosage | grams | 135 | 135 |
| Cycle time | sec | 237 | 173 |

**Table 2:**

| Material: Polyamide + | Unit of measure | Value without additive 2 | Value with 2% additive 2 |
|---|---|---|---|
| 25% glass fiber | | | |
| Region 1 mixer | °C | 280 | 265 |
| Region 2 mixer | °C | 270 | 270 |
| Speed of injection screw feeder | rpm | 45 | 100 |
| Part cooling time | sec | 4 | 1.5 |
| Dosage | grams | 24 | 23 |
| Cycle time | sec | 15.3 | 12.3 |

**Table 3:**

| Material: Polyamide (Nylon) | Unit of measure | Value without additive 2 | Value with 2% additive 2 |
|---|---|---|---|
| Region 1 mixer | °C | 290 | 280 |
| Region 2 mixer | °C | 270 | 260 |
| Speed of injection screw feeder | rpm | 70 | 70 |
| Part cooling time | sec | 32 | 22 |
| Dosage | grams | 77 | 75 |
| Cycle time | sec | 56 | 42.5 |

The operating principle of the present invention can be summarized as follows: additive 2 is activated by the heat during the molding process and acts by reducing the cohesion forces between the respective adjacent faces of the molecules of the polymer being used.

The lubricating properties of the additive 2 are such as to promote an increase in the efficiency of the process without delaying the melting time and/or compromising the physical properties of the molded part.

When the additive 2 is introduced in a mixture of polymers, it interrupts the macromolecular chains of the polymer, making them in practice shorter on average. In this manner, the material - constituted by smaller molecular aggregates - flows with less friction through the outlet of the mixer and through the subsequent nozzle.

The additive 2 added to the mass of the polymer allows better dispersion of the heat, which flows more rapidly through the part.

This is due to the finer macromolecular structure with microcells produced by the additive 2. This microstructural configuration, in the molded part, facilitates the transfer of heat from the core to the surface.

The advantages achieved by the present invention relate both to the processing of the polymeric mixture and to the finished product.

Processing advantages:
-- it allows to use recycled raw materials, i.e., practical composite plastics obtained from sorted waste collection /recycling, making it possible to use mixtures of polymers that are otherwise mutually incompatible;
-- it increases thermal conductivity, thus reducing the temperatures of the thermoforming mold;
-- it is a plasticizer for the polymeric mixture, which can therefore be processed at lower temperatures;
-- it is an agent that promotes nucleation, so as to obtain a finer microstructure with improved mechanical characteristics;
-- it improves the release of the finished product from the thermoforming mold;
-- it reduces the wear of the mechanical parts in direct contact with the polymeric mixture.
Advantages in the finished product:
-- it improves UV stabilization of the plastics;
-- it improves resistance to thermal shocks;
-- it improves the action of any antistatic agents;
-- it improves the action of any fire-retardants;
-- it reduces the porosity of the plastics, improving the quality of the surfaces;
-- it gives the plastics a more brilliant color, so as to allow to reduce the coloring pigments.

All these advantages lead to a reduction in cycle times and to a reduction in the consumption of energy due to the lower operating temperatures.

It has thus been observed that the invention achieves the intended aim and objects.

The invention thus conceived is susceptible of numerous modifications and variations, all of which are within the scope of the appended claims.

In practice, the formulation of the additive according to the present invention may undergo slight modifications to its composition without thereby abandoning the scope of the protection of the appended claims.

## Claims

1. A multipurpose additive for polymeric materials and the like, **characterized in that** it comprises a mixture of silica and alumina, both in amorphous form and reactive with respect to polymeric mixtures, said mixture being suitable to increase thermal conductivity of said polymeric mixtures and to reduce surface tension between molecules that constitute said polymeric mixture.

2. The additive according to claim 1, **characterized in that** it comprises a polymeric matrix suitable to bind said silica and alumina mixture and to form granules and avoid the dispersion of said mixture of alumina and silica in the atmosphere.

3. The additive according to claim 1, **characterized in that** said amorphous silica is comprised between a percentage of 74 and 80% by weight and said amorphous alumina is comprised in a percentage of 17 to 21% by weight.

4. The additive according to claim 1, **characterized in that** it comprises percentages by weight of 0 to 1% of the following components: calcium oxide, magnesium oxide, sodium oxide, potassium oxide, iron oxide, titanium oxide.
